(19) Europäisches Patentamt / European Patent Office / Office européen des brevets

(11) **EP 3 718 620 A1**

(12) # EUROPEAN PATENT APPLICATION

(43) Date of publication:
**07.10.2020   Bulletin 2020/41**

(51) Int Cl.:
**B01D 39/16** *(2006.01)*          **B01D 39/18** *(2006.01)*
**B01D 39/20** *(2006.01)*

(21) Application number: **19166533.0**

(22) Date of filing: **01.04.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Neenah Gessner GmbH
83052 Bruckmühl (DE)**

(72) Inventors:
• **HÄRINGER, Christoph
  87642 Halblech (DE)**
• **NIENTIEDT, Jürgen
  83109 Großkarolinenfeld (DE)**
• **KEPPLER, Christof
  83620 Vagen (DE)**

(74) Representative: **Gerauer, Marc Philippé
Kraus & Weisert
Patentanwälte PartGmbB
Thomas-Wimmer-Ring 15
DE-80539 München (DE)**

(54) **FILTER MEDIUM WITH PRINTED POLYMER PATTERN**

(57)    The present invention relates to a filter medium with a printed polymer pattern, as well as related assemblies and methods.

EP 3 718 620 A1

## Description

## Technical field of the invention

The present invention relates to a filter medium with a printed polymer pattern, as well as related assemblies and methods.

## Prior art

Filter media are used in a variety of systems to remove undesirable materials (i.e. particles) from a liquid or gas by passing the liquid or gas through the filter media.

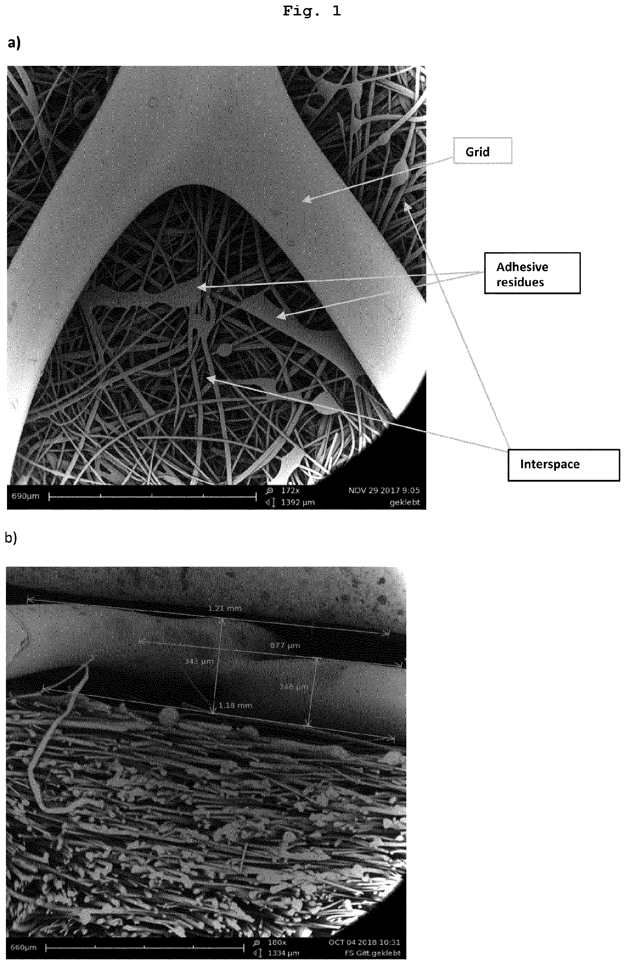

In order to increase the surface area available to remove undesirable materials, the filter media are usually used in a pleated configuration. There is, however, a tendency of the pleated filter media to collapse or tear with the time due to the high differential pressure, which will be generated during use by the accumulation of contaminants on or within the filter medium. Currently, to increase stiffness and avoid the collapse of the filter media a grid is glued on the surface of the filter media. Such filter media, however, are quite expensive and require many production steps. More specifically, an adhesive is first sprayed on the entire surface of the filter media and then the grid is applied, i.e. glued, on this surface. The resulting filter medium will be characterized by interspaces delimited by the grid through which (interspaces) the liquid or gas is filtered (see Fig. 1a)). A further disadvantage of such filter media is that adhesive residues are present on the interspaces (see Fig. 1a)). This has a negative effect on the filtration efficiency due to the fact that the pores can be blocked by adhesive residues. Further, such residues can be washed out during use. Indeed, as can be seen from Fig. 1 the adhesive residues correspond to relatively small spots of adhesive, which are only superficially deposited on the fibers comprised in the filter layer. Accordingly, these residues can be released during use of the filter medium (due to the differential pressure generated). When the grid is on the clean side (i.e. the outflow side) of the filter media, the washing out of adhesive residues is quite critical and may create many problems.

## Summary of the invention

It is an object of the present invention to provide a filter medium having constant efficiency over the time and longer service life. Further, the filter medium of the present invention can be produced in an easier and cheaper way compared to prior art filter media. Due to the presence of a layer with a printed polymer pattern on its surface collapsing of the filter medium and release of undesirable adhesive residues can be effectively avoided.

The filter medium according to the present invention comprises a printed polymer pattern as described in the appending claims and can be used in many applications such as liquid, i.e. lube oil, fuel etc., or gas filtration.

## Brief Description of the Drawings

Fig. 1a) and b): Show a filter medium according to the prior art.
Fig. 2: Shows a filter medium with a printed polymer pattern (in this example the pattern is a grid similar to the grid of the prior art) according to the present invention.
Fig. 3: Shows a cross-sectional view of a filter medium according to the present invention obtained by scanning electron microscope (SEM).
Fig. 4: Shows some examples of possible pattern for the printed polymer.

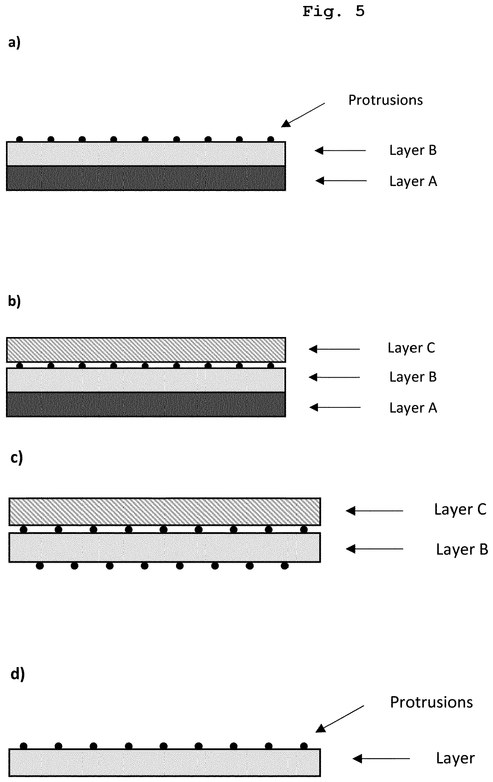

Fig. 5: Shows a cross-sectional view of some of the possible configurations according to the present invention. In this cross-sectional view the printed polymer pattern is represented as protrusions. a) shows a filter medium comprising two layers wherein the printed polymer pattern represents an external surface of the filter medium; b) shows a filter medium comprising three layers wherein the printed polymer pattern is on an internal surface of the filter medium (i.e. between the filtration layers B and C); c) shows a filter medium comprising two layers and two printed polymer patterns (one on an internal surface and the other on an external surface of the filter medium); d)shows a filter medium comprising one layer only with a printed polymer pattern on one side (i.e. surface) of the layer.

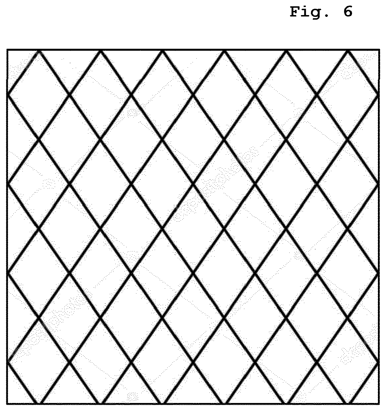

Fig. 6: shows a layer with a printed polymer pattern according to the present invention; wherein the design of the printed polymer pattern is a grid.

## Detailed Description of the Invention

The present invention provides a filter medium comprising at least one layer with at least one printed polymer pattern on at least one surface of the at least one layer.

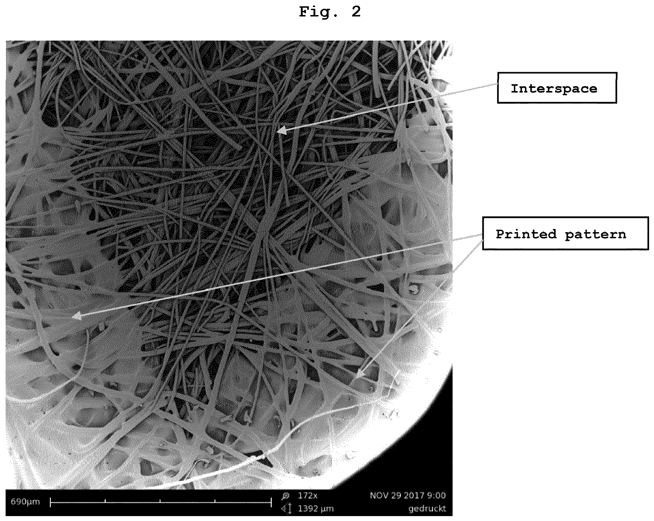

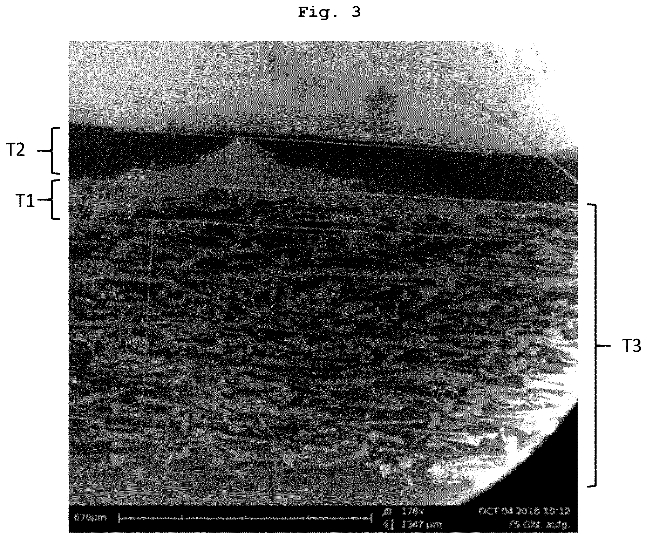

The peculiarity of the layer with the printed polymer pattern is that the printed polymer pattern cannot be separated from said layer thereby leading to a stable structure. Indeed, once the polymer pattern is printed on the surface of the layer of the filter medium the polymer penetrates at some extends into the layer so that it is integrated into the layer (see Fig. 2 and 3).

In the present invention, the surface of the layer comprising the printed polymer pattern can represent an external surface of the filter medium or, alternatively, the surface of the layer comprising the printed polymer pattern can be bound to another filtration layer so that the printed polymer pattern will be located between two filtration layers, i.e. the printed surface of the layer with the printed polymer pattern represents an internal surface of the filter medium. It is also possible that more than one surface of the layer (s) is printed. Some of the possible configurations are shown in Fig. 5.

In the present invention the layer surface comprising the printed polymer pattern is preferably an external surface of the filter medium; in other words, the polymer pattern is printed on the inflow side and/or outflow side of the filter medium.

In the present description, the layer surface comprising the printed polymer patter is to be understood as the filtering surface. More specifically, the gas or liquid to be filtered passes through the filtering surface.

According to the present invention, the depth of the printed polymer pattern into the printed layer is 2-40% of the thickness of the layer, preferably 3-14% and even more preferably 8-13%. The depth as defined herein represents the percentage of the layer thickness in which the polymer penetrates. With reference to Figure 3, the depth of the printed polymer pattern is calculated as follows:

$$Depth\ (\%)\ =\ (T1/T3)\ x\ 100$$

In the above formula, T1 represents the thickness of the layer in which the printed polymer has penetrated (can be expressed in $\mu$m); and T3 represents the entire thickness of the layer (i.e. the thickness of the layer excluding the protrusions, and can be expressed in $\mu$m). It is important to notice that the thickness referred to for the calculation of the depth (%) (i.e. the two values T1 and T3) is calculated by SEM and not using standard method for thickness calculation.

In addition, since the printed polymer pattern protrudes from the surface of the layer, collapsing of the pleated filter medium is avoided.

The thickness of the printed polymer pattern from the surface of the layer of the filter medium (i.e. the height of the protrusions from the layer surface, indicated as T2 in Fig. 3) can be selected as desired, provided that it guaranties no collapsing of the filter medium. A protrusion height of at least 80 $\mu$m is already enough to avoid collapsing. The height of the protrusions can be from 80 $\mu$m to 1000 $\mu$m. With reference to Fig. 3, the height of the protrusions in percentage of the thickness of the filter layer can be calculated as follows:

$$Height\ (\%)\ =\ (T2/T3)\ x\ 100$$

In the above formula, T2 represents the thickness of the printed polymer pattern from the surface of the layer (i.e. the height of the protrusions from the layer surface); and T3 represents the entire thickness of the layer (i.e. the thickness of the layer excluding the protrusions). Also in this case T2 and T3 can be expressed in $\mu$m and are calculated by SEM.

The height of the protrusions from the surface of the layer is at least 8% of the thickness of the layer (T3), preferably 10-70% and even more preferably 12-50%.

As described herein, the height of the protrusion T2 can be calculated by drawing a line defining the surface of the layer of the filter media without the protrusions and then measuring the distance between this line and the maximum height of the protrusion (see Fig. 3).

The polymer of the printed polymer pattern is preferably a hot melt adhesive. The polymer of the printed polymer pattern or the base material of the hot melt adhesives, respectively, according to the present invention can be selected from the group consisting of:

- Ethylene-vinyl acetate (EVA) copolymers;
- Polyolefins (PO) such as polyethylene (usually low-density polyethylene (LDPE) but also high-density polyethylene (HDPE); HDPE has higher melting point and better temperature resistance), polypropylene (PP), atactic polypropylene (APP), polybutene-1, oxidized polyethylene, etc.);
- Polyamides (PA) and copolyamides (CoPA);
- Polyesters (PES), copolyester (CoPES) such as polyethylentherephthalate (PET), copolymer of PET (CoPET), polybuthylentherephthalate (PBT) and copolymer of PBT (CoPBT);
- Thermoplastic polyurethane (TPU);
- Styrene block copolymers (SBS); and
- mixtures thereof.

The polymer of the printed polymer pattern or the hot melt adhesive, respectively, of the present invention can also comprise a mixture of at least two of the above listed polymers or base materials, respectively. Preferably, the polymer of the printed polymer pattern or the hot melt adhesive is a polyester or co-polyester. Suitable copolyester hot melt adhesive are for example, Griltex D 1502E and Griltex D 1841E from EMS-Chemie AG.

The polymer of the printed polymer pattern or the hot melt adhesive should be selected so that its melting temperature is lower than the melting temperature of the fibers which make up the layer(s).

The polymers or the hot melt adhesives, respectively, of the present invention soften upon heating to a fusion temperature, harden as they cool and may soften again upon further heating. Once they harden, they do not act as adhesive/sticky materials and they are not sticky or have adhesive behavior at room temperature. The selection of the polymers or hot melt adhesives depends on the field of application. For example, for lube oil filtration applications, where the temperature reached during use is up to 140 °C, it is necessary that the printed polymer pattern does not melt or softens during use. Hence, the polymer or the hot melt adhesive for this application should have a melting point of at least 160 °C. For other applications, such as air filtration applications, lower melting point polymers or hot melt adhesives can be used.

In addition to the base material the hot melt adhesive may comprise various additives such as pigments, biocides, antistatic agents, fillers, carbon black etc.

The pattern of the printed polymer can have any shape provided that it covers 50% or less, preferably 40% or less and even more preferably 30% or less of the surface area of the layer side on which it is printed. In order to have enough mechanical support the printed polymer patter covers at least 10% of the surface area of said layer side and preferably at least 20%. The less the surface area covered by the pattern the more the filtering surface area of the printed layer. Herein, values given as percentage of the surface area of the layer refer to the percentage of the surface of the printed side(s) of the layer and not to surfaces of layer sides without a printed polymer pattern.

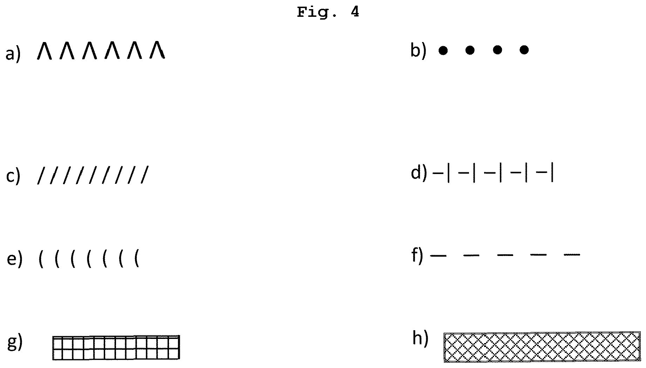

Examples of possible configurations of the printed polymer pattern are given in Fig. 4 but, as stated above, any other configuration is also possible such as for example a grid configuration.

The surface area of the at least one layer with the at least one printed polymer pattern free from the printed polymer pattern (s) is 50% or more and preferably 60% or more of the entire surface of the printed side of the layer. In particular, the surface area of the printed layer free from the printed polymer pattern (i.e. the surface area of the total number of interspaces in the filter layers as shown in Fig. 2) is 50-90%, preferably 60-85% and even more preferably 65-80% of the entire surface of the printed side(s) of the layer. If the surface area free from the printed polymer pattern in the layer with a printed polymer pattern on its surface is within this range, an advantageous balance of providing mechanical support to the filter medium and providing sufficient filtration area is achieved.

The amount of printed polymer pattern on the layer that has been printed with the polymer pattern is at least 25%, preferably at least 35% and more preferably at least 50% by weight based on the basis weight of the layer that has been printed with the polymer pattern before the printing. For example, if the layer before printing has a basis weight of 200 $g/m^2$, the amount of printed polymer pattern can be 50 $g/m^2$, 70 $g/m^2$ or 100 $g/m^2$; so that the basis weight of the printed layer will be 250 $g/m^2$, 270 $g/m^2$, and 300 $g/m^2$, respectively.

The use of hot melt adhesive is particularly advantageous compared to solvent based adhesives due: to a reduced amount or absence of volatile organic compounds used as solvents, as well as to a constant thickness of the hot melt adhesive before and after solidifying (i.e. solvent based adhesives may lose up to 50-70% of the layer thickness during drying). In this way the height of the protrusion can be accurately selected as desired.

The hot melt adhesives of the present invention can be distinguished from resin solutions usually used in saturation in that they do not comprise solvents. In the present invention hot melt adhesives (HMA) means solid compounds under standard conditions for temperature and pressure (i.e. 25 °C and 101kPa, respectively) that adhere to the surface of the filter layer only by means of heating. When the mixing in of an additive, such as for example a pigment, is desired, the additive is already present in the HMA in solid form.

The solid hot melt adhesives can be printed on the layer of the filter medium by means of gravure roll, thereby generating a pattern that protrudes from the surface of the layer of the filter medium. The shape and the size of the gravure pattern can be selected as desired. By using gravure rolls, the HMA is applied in a fused form. Alternatively, the hot melt adhesive can be applied in solid form through granule scattering machines or other devices and then melted, thereby generating a pattern that protrudes from the surface of the layer of the filter medium.

The temperature used for the gravure roll or after the granule scattering depends on the melting temperature of the hot melt adhesive used. The hot melt adhesive is selected so that its melting temperature is lower that the melting temperature of the fibers making up the filter layer to be printed.

The printing of polymer patterns also has the advantage that an accurate deposition of the polymer on the surface of the layer can be obtained, thereby delimiting the presence of the polymer only to the desired area.

For multi-layer filter media, it is possible to first print the surface of a layer with a polymer pattern and then bind the printed layer with the remaining layers or, alternatively, bind for example two layers and then print the surface of one of the layers with a polymer pattern. The binding of the different layers can be obtained by means of any known methods.

The printed polymer pattern can be on an external surface of the filter medium or on an internal surface. Some examples of possible configurations are given in Fig. 5.

After production of the wet-laid layer, dry-laid layer or foam-made layer, as outlined below, said layer can be printed with a polymer pattern through the methods mentioned above online.

The filter medium comprising the layer with a printed polymer pattern according to the present invention can be used in many applications such as liquid and gas filtration. The filter medium can comprise only the printed layer or additional layers. It is worth to mention that in multi-layer filter media the use of a printed layer according to the invention allows the reduction of layers number in the filter medium. More specifically, in those multi-layer filter media wherein one layer is used only as a supporting layer, this layer would not be necessary anymore if one of the other layers has a printed polymer pattern providing the desired strength. Accordingly, a single layer filter medium wherein the single layer is a filtration layer that has a printed polymer pattern can replace a two-layer filter medium comprising a supporting layer and a filtration layer. The same applies to filter media having more than one layer.

The filter medium of the present invention comprises at least one layer. Preferably, the filter medium of the present invention comprises from one to five layers, more preferably from one to four layers, even more preferably from one to three layers, even more preferably from one to two layers. Preferably, the filter medium of the present invention consists of one filter layer with a printed polymer pattern on its surface. Even more preferably, the printed side of the filter layer represents the downstream side (i.e. the outflow side). Preferably, the at least one layer with the at least one printed polymer pattern is located on the feed side of the filter medium and the printed side of the filter layer represents the downstream side (i.e. the outflow side).

Preferably, the surface of the at least one layer comprising the printed polymer pattern is the outflow side of the filter medium.

In some case, it may be preferable to have the printed surface of the layer as an internal surface of the filter medium. In this configuration, the protrusions of the printed polymer patterns generate a hollow space between two adjacent layers. For example, in fuel filtration such a configuration may improve the filtration of water. In other words, such a configuration improves the water separation due to more ideal flow conditions. Possible examples are shown in Fig. 5b) and Fig. 5c).

The layer to be printed can be any layer selected from the group of wet-laid nonwovens, dry-laid nonwovens and foam layers. The selection of the filter layer material, as well as of the polymer of the printed polymer pattern or the hot melt adhesive, respectively, will depend on the desired field of application and filter performances.

Within the meaning of this invention, wet-laid nonwovens are all nonwovens that can be produced using wet-laying processes known to the skilled person for manufacturing filter media. The wet-laid nonwoven for the filter layer material according to the invention comprises natural, synthetic, inorganic fibers or mixture thereof.

Examples of natural fibers are cellulose, cotton, wool, hemp, regenerated celluloses and fibrillated celluloses.

Inorganic fibers are, for example, glass fibers, basalt fibers and quartz fibers. Preferably, the inorganic fibers are glass fibers. The average fiber diameter of the inorganic fibers is 0,1 to 15 $\mu$m, preferably 0,6 to 10 $\mu$m.

Polyester fibers, polypropylene fibers, multicomponent fibers of which the individual components have different melting points, polyamide fibers and acrylic fibers for example are suitable as synthetic fibers.

Examples of polyester fibers are polybutylentherephthalate (PBT) fibers, polyethylentherephthalate (PET) fibers and polylactic acid (PLA) fibers.

Examples of preferred multicomponent fibers are PET/CoPET bicomponent fibers having core-sheath configuration.

The average fiber diameter of the synthetic fibers is typically from 3 to 30 $\mu$m, preferably 5 to 15 $\mu$m, and the cutting length is typically from 3-20 mm, preferably 4-12 mm.

The layer to be printed according to the invention can consist 100% of natural, synthetic or inorganic fibers, but any desired combination of these kinds of fibers is also possible. Preferably, the layer with a printed polymer pattern on its surface comprises, or consists of, synthetic fibers. More preferably, the synthetic fibers are polyester fibers. The use of synthetic fibers, and in particular the use of polyester fibers, is particularly suitable for those applications in which stability and heat resistance of the filter might be an issue. In the present invention, the expression "consisting of 100% of natural, synthetic or inorganic fibers" should be interpreted as meaning that the layer contains only natural, synthetic or inorganic fibers and no additional types of fibers. However, the layer (or the filter media) may contain other substances such as binders, dyes etc.

Preferably, the filter medium comprises one layer with one printed polymer pattern on one surface of the layer.

Preferably, the filter medium comprises one layer with one printed polymer pattern on one surface of the layer, wherein the polymer of the printed polymer pattern comprises a hot melt adhesive.

Preferably, the filter medium comprises one layer with one printed polymer pattern on one surface of the layer, wherein the layer comprises, or consists of, polyester fibers.

Preferably, the filter medium comprises one layer with one printed polymer pattern on one surface of the layer, wherein the surface of the one layer comprising the printed polymer pattern is the outflow side of the filter medium.

Preferably, the filter medium comprises one layer with one printed polymer pattern on one surface of the layer, wherein the surface of the one layer comprising the printed polymer pattern is the outflow side of the filter medium and wherein the polymer of the printed polymer pattern comprises a hot melt adhesive.

Preferably, the filter medium comprises one layer with one printed polymer pattern on one surface of the layer, wherein the surface of the one layer comprising the printed polymer pattern is the outflow side of the filter medium and wherein the layer comprises, or consists of, polyester fibers.

Preferably, the filter medium comprises one layer with one printed polymer pattern on one surface of the layer, wherein the surface of the one layer comprising the printed polymer pattern is the outflow side of the filter medium, wherein the polymer of the printed polymer pattern comprises a hot melt adhesive and wherein the layer comprises, or consists of, polyester fibers.

The layer to be printed can be selected from a dry-laid nonwoven, wet-laid nonwoven or a foam layer. A person skilled in the art knows, on account of his knowledge and experience, that the correct composition should be specifically selected in each case according to the required filter properties. The layer can consist of a plurality of plies, which are either produced in a paper machine, having a head box suitable for this purpose, and combined, or produced from individual webs, which are interconnected in a separate processing step. In this case, the individual plies can have different properties.

Dry-laid nonwovens include, for example, meltblown nonwovens and spunlaid nonwovens, which can be produced according to known manufacturing methods.

Suitable polymers to be used for the meltblown nonwovens and spunlaid nonwovens are, for example, polycarbonate, polyethylene terephthalate, polybutylene terephthalate, polyethylene naphthalate, polybutylene naphthalate, polyamide, polyphenylene sulfide, polyolefin, and polyurethane or mixture therof.

In many applications a spunlaid nonwoven comprising bicomponent fibers is particularly advantageous. Example of preferred multicomponent fibers are PET/CoPET bicomponent fibers having core-sheath configuration. The typical average fiber diameter for spunlaid nonwoven is 5-30 $\mu$m, preferably 10-20 $\mu$m and even more preferably 12-17 $\mu$m.

The average fiber diameters for meltblown fibers are 0.5-10 $\mu$m, preferably 0.5-5 $\mu$m. Depending on the requirements, additives such as crystallisation promoters, dyes and/or charge enhancing additives can also be mixed into the polymers. In addition, the meltblown layer can be compressed using a calendar.

Foams are to be understood as meaning all open-cell foams produced from organic polymers. On account of the open-cell structure thereof, said foams are air-permeable and are suitable for a wide range of filtration applications. The manufacture of suitable foams is described by way of example in US 3 171 820A, DE 1504551 A, DE 601435 A and GB 1111928 A.

As mentioned above, the composition of the layer to be printed as well as the type of hot melt adhesive to be used for the printed polymer pattern depends on the field of application.

A particularly stable filter medium may comprise a wet-laid single layer made of synthetic fibers, which is printed with a hot melt adhesive. The single layer comprises 5-50% by weight of mono-component synthetic fibers and 50-95% by weight of bi-component synthetic fibers and preferably 10-35% by weight mono-component synthetic fibers and 65-90% by weight of bi-component synthetic fibers based on the total weight of the fibers contained in the layer (before being printed). The indicated % by weight are calculated based on the total weight of fibers in the layer. Preferably, the mono-component fibers as well as the bi-component fibers comprise polyester fibers (for example mono-component polyethylene terephthalate fibers and core-sheath PET/CoPET bi-component fibers). Any type of hot melt adhesive can be used but a co-polyester would be preferable. This full synthetic filter medium (i.e. consisting of the above-indicated synthetic fibers) is particularly suitable for liquid application such as lube oil filtration.

For liquid application such as fuel filtration, a layer comprising at least 60% by weight of cellulose fibers based on the total weight of the fibers contained in the layer (before being printed) and having a printed polymer pattern according to the present invention may be particularly suitable.

**Tests Methods**

Basis weight:

- according to DIN EN ISO 536 (2012) for filter medium comprising cellulose;
- according to EN 29073 (1992) for filter medium comprising only synthetic fibers.

Fiber diameter:

Device: scanning electron microscope (SEM) "Phenom Fei" with associated software Fibermetric V2.
Sampling: 5 different area of the filter medium will be analyzed over the web width.
Sample sputtering: Random recording of optical images, these areas are scanned with a 1000x magnification.
Fiber diameter determination via "one click" method, every fiber has to be recorded once; Measuring points that detect the crossing points of fibers and thus do not represent the fiber diameter are removed manually. A continuous fiber bundling is considered as a single fiber.

Thickness:

Device: scanning electron microscope (SEM) "Phenom Fei" with associated software Fibermetric V2.
Sample sputtering: Random recording of optical images, these areas are scanned with magnification which will be chosen case by case. The magnification should be such that the values T1, T2 and T3 as described in the present invention can be easily calculated.

Percentage of surface area free from the printed polymer pattern or percentage of surface area covered with printed polymer pattern:

- These percentages are usually selected and known before the production of the medium.
- For example, if the printed polymer pattern is produced with gravure rolls, the gravure can be selected as to obtain the desired percentage of printed polymer pattern. Also in the case of granule scattering, the selection of the pattern design already gives the indication of the surface area, which will be covered/free from polymer. An alternative way to measure the percentage of surface area on the final product is for example by means of the Jomesa Cleanliness Analysis System. In this system, the whole surface of the medium is automatically scanned with a microscopy. Then, with the help of the Software PicED Cora it is possible to automatically detect and calculate the surface area occupied by the printed polymer pattern. As it is apparent to the skilled person, the dimension of the detected surface area can be selected as desired provided that the design of the pattern is replicated at least twice (so that the sample is representative of the entire layer).

**Claims**

1. A filter medium comprising at least one layer with at least one printed polymer pattern on at least one surface of the at least one layer.

2. The filter medium according to claim 1, wherein the surface of the at least one layer comprising the printed polymer pattern is the outflow side of the filter medium.

3. A filter medium according to any one of claims 1 to 2, wherein the polymer of the at least one printed polymer pattern comprises a hot melt adhesive.

4. A filter medium according to any one of claims 1 to 3, wherein the polymer of the at least one printed polymer pattern is selected from the group consisting of ethylene-vinyl acetatecopolymers, polyolefins, polyamides, copolyamides, polyesters, copolyester, thermoplastic polyurethane, styrene block copolymers, and mixtures thereof.

5. A filter medium according to any one of claims 1 to 4, wherein the surface area of the at least one layer with the at least one printed polymer pattern free from the printed polymer pattern is 50% or more and preferably 60% or more of the entire surface of the printed side(s) of the layer.

6. A filter medium according to any one of claims 1 to 5, wherein the at least one layer with the at least one printed polymer pattern on the at least one surface comprises, or consists of, synthetic fibers.

7. A filter medium according to claim 6, wherein the synthetic fibers are polyester fibers.

8. A filter medium according to any one of claims 1 to 7, consisting of one layer.

9. A filter comprising the filter medium according to any one of claims 1 to 8.

10. A method to produce the filter medium according to any one of claims 1 to 8 comprising the step of printing a polymer pattern on at least one surface of at least one layer of a filter medium.

Fig. 1

a)

b)

Fig. 2

Fig. 3

Fig. 4

a) Λ Λ Λ Λ Λ Λ

b) ● ● ● ●

c) / / / / / / / /

d) −| −| −| −| −|

e) ( ( ( ( ( ( (

f) — — — — —

g) ▦

h) ▨

EP 3 718 620 A1

Fig. 5

a)

b)

c)

d)

Fig. 6

Europäisches
Patentamt

European
Patent Office

Office européen
des brevets

## EUROPEAN SEARCH REPORT

Application Number

EP 19 16 6533

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 161 422 A (LAWSON GROVER C [US] ET AL) 17 July 1979 (1979-07-17) * column 2, lines 55-58; claim 1; figure 1 * * column 3, lines 15-20 * | 1-10 | INV. B01D39/16 B01D39/18 B01D39/20 |
| X | US 3 798 120 A (ENLOE K ET AL) 19 March 1974 (1974-03-19) * column 3, lines 20-25; claim 1; figures 1-3 * * column 4, lines 1-30 * | 1-5,8-10 | |
| X | WO 01/09425 A1 (DU PONT [US]) 8 February 2001 (2001-02-08) * page 17, lines 33-38 * | 1,5 | |
| X | US 2010/139224 A1 (LIM HYUN SUNG [US] ET AL) 10 June 2010 (2010-06-10) * pages 1-4, 6-1, paragraph 48-53 * | 1-4,8-10 | |
| X | WO 2016/054172 A1 (DONALDSON CO INC [US]) 7 April 2016 (2016-04-07) * page 13, lines 1-11 * | 1-4,8-10 | TECHNICAL FIELDS SEARCHED (IPC) B01D |

The present search report has been drawn up for all claims

| Place of search | Date of completion of the search | Examiner |
|---|---|---|
| The Hague | 23 September 2019 | Artos Fernández, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 718 620 A1**

## ANNEX TO THE EUROPEAN SEARCH REPORT
## ON EUROPEAN PATENT APPLICATION NO.

EP 19 16 6533

23-09-2019

| Patent document cited in search report | | Publication date | Patent family member(s) | | Publication date |
|---|---|---|---|---|---|
| US 4161422 | A | 17-07-1979 | CA | 1073372 A | 11-03-1980 |
| | | | DE | 2723528 A1 | 22-12-1977 |
| | | | FR | 2353327 A1 | 30-12-1977 |
| | | | GB | 1522280 A | 23-08-1978 |
| | | | IT | 1116312 B | 10-02-1986 |
| | | | JP | S6025170 B2 | 17-06-1985 |
| | | | JP | S52147370 A | 07-12-1977 |
| | | | MX | 5055 E | 08-03-1983 |
| | | | US | 4119543 A | 10-10-1978 |
| | | | US | 4161422 A | 17-07-1979 |
| US 3798120 | A | 19-03-1974 | NONE | | |
| WO 0109425 | A1 | 08-02-2001 | CA | 2378912 A1 | 08-02-2001 |
| | | | CN | 1369027 A | 11-09-2002 |
| | | | DE | 60012330 T2 | 28-07-2005 |
| | | | EP | 1200661 A1 | 02-05-2002 |
| | | | ES | 2223560 T3 | 01-03-2005 |
| | | | JP | 4917227 B2 | 18-04-2012 |
| | | | JP | 2003506582 A | 18-02-2003 |
| | | | MX | PA02001169 A | 30-07-2002 |
| | | | WO | 0109425 A1 | 08-02-2001 |
| US 2010139224 | A1 | 10-06-2010 | BR | PI0917059 A2 | 02-08-2016 |
| | | | CN | 102227247 A | 26-10-2011 |
| | | | EP | 2364196 A1 | 14-09-2011 |
| | | | JP | 5875180 B2 | 02-03-2016 |
| | | | JP | 2012512731 A | 07-06-2012 |
| | | | KR | 20110103998 A | 21-09-2011 |
| | | | KR | 20170015552 A | 08-02-2017 |
| | | | US | 2010139224 A1 | 10-06-2010 |
| | | | WO | 2010065949 A1 | 10-06-2010 |
| WO 2016054172 | A1 | 07-04-2016 | CN | 107075758 A | 18-08-2017 |
| | | | EP | 3201382 A1 | 09-08-2017 |
| | | | US | 2017210835 A1 | 27-07-2017 |
| | | | WO | 2016054172 A1 | 07-04-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3171820 A
- DE 1504551 A
- DE 601435 A
- GB 1111928 A